# EUROPEAN PATENT SPECIFICATION

(11) **EP 2 624 534 B1**
(45) Date of publication and mention of the grant of the patent: **23.01.2019**
(21) Application number: 13153282.2
(22) Date of filing: 30.01.2013
(51) Int. Cl.: H04M 3/22, H04L 29/06, H04W 12/02, H04W 64/00, H04K 3/00, H04M 3/42

(54) **Systems and methods for correlating cellular and WLAN identifiers of mobile communication terminals**
Systeme und Verfahren für die Korrelation zellulärer und WLAN-Identifikatoren von mobilen Kommunikationsendgeräten
Systèmes et procédés pour corréler des identificateurs cellulaires et WLAN de terminaux de communication mobiles

(30) Priority: 31.01.2012 IL 21786712
(43) Date of publication of application: 07.08.2013
(73) Proprietor: Verint Systems Ltd., Herzelia Pituach 46733 (IL)
(72) Inventor: Goldfarb, Eithan, Ness Ziona (IL)
(74) Representative: Goddard, Frances Anna

(56) References cited:
- CA-A1- 2 779 410
- US-A1- 2008 220 749
- US-B2- 7 882 217

## Description

### FIELD OF THE DISCLOSURE

The present disclosure relates generally to communication monitoring, and particularly to methods and systems for extracting and correlating mobile communication terminal identifiers.

### BACKGROUND OF THE DISCLOSURE

Communication terminals are identified in communication networks using various kinds of communication identifiers. Extraction and tracking of communication identifiers are an important tool in many applications, such as various intelligence, homeland security and crime prevention purposes.

### SUMMARY OF THE DISCLOSURE

An embodiment that is described herein provides a method including intercepting communication of a mobile communication terminal while the communication terminal is located at a defined location at a defined time. A first identifier that identifies the communication terminal in a cellular network, and a second identifier that identifies the communication terminal in a Wireless Local Area Network (WLAN), are extracted from the intercepted communication. A correlation is established between the first and second identifiers based on the defined location and time.

In some embodiments, the defined location includes a control checkpoint. In an embodiment, the extracted first identifier includes at least one identifier type selected from a group of types consisting of an International Mobile Subscriber Identity (IMSI), a Mobile Station International Subscriber Directory Number (MSISDN), an International Mobile Equipment Identity (IMEI) and a Temporary Mobile Subscriber Identity (TMSI). In a disclosed embodiment, the extracted second identifier includes a Medium Access Control (MAC) address.

In some embodiments, establishing the correlation includes establishing multiple correlations at respective different locations and intersecting the multiple correlations to eliminate false correlations. In a disclosed embodiment, intercepting the communication and extracting the identifiers include positioning one or more interrogation devices so as to cover an expected location of a target individual. In an embodiment, intercepting the communication includes receiving the communication using multiple interrogation devices having respective coverage regions that jointly define the location.

In another embodiment, the method includes extracting from the intercepted communication a third identifier that identifies the communication terminal in a point-to-point communication system, and establishing the correlation among the first, second and third identifiers. In yet another embodiment, the method includes, responsively to the correlation, invoking a WLAN-based tracking system to track the extracted second identifier.

In still another embodiment, the defined location includes a control checkpoint, and the method includes correlating the first and second identifiers with additional information items relating to a user of the communication terminal, selected from a group of items consisting of information provided by the user at the control checkpoint, an image of the user acquired at the control checkpoint, and a license plate number of the user recognized at the control checkpoint.

In an embodiment, the method includes extracting from the intercepted communication an application-layer identifier that identifies the communication terminal in an application running over the WLAN, and correlating the application-layer identifier with the second identifier.

There is additionally provided, in accordance with an embodiment that is described herein, an apparatus including at least one interrogation device and a correlation processor. The interrogation device is configured to intercept the communication of a mobile communication terminal located at a defined location at a defined time, and to extract from the intercepted communication a first identifier that identifies the communication terminal in a cellular network and a second identifier that identifies the communication terminal in a Wireless Local Area Network (WLAN). The correlation processor is configured to establish a correlation between the first and second identifiers based on the defined location and time.

US 7 882 217 B2 discloses a method for correlating identifiers of entities in order to form identity clusters by intercepting communication sessions.

CA 2 779 410 A1 discloses a method for correlating identifiers of related to persons by using different kinds of sensors in the same location.

US 2008/220749 A1 discloses a method for acquiring identity parameters by emulating base stations.

The present disclosure will be more fully understood from the following detailed description of the embodiments thereof, taken together with the drawings in which:

### BRIEF DESCRIPTION OF THE DRAWINGS

Fig. 1 is a pictorial, schematic illustration of a system for collecting information at control checkpoints, in accordance with an embodiment that is described herein;
Fig. 2 is a block diagram that schematically illustrates a system for collecting information at control checkpoints, in accordance with an embodiment that is described herein; and
Fig. 3 is a flow chart that schematically illustrates a method for correlating cellular and WLAN identifiers, in accordance with an embodiment that is described herein.

### DETAILED DESCRIPTION OF EMBODIMENTS

### OVERVIEW

Tracking of mobile communication terminals, such as cellular phones, is an important surveillance tool in many anti-terrorist and crime prevention applications. In many cases, however, it is difficult to correlate communication terminals with the individuals who carry them. In particular, hostile users often take measures to prevent tracking of their mobile communication terminals.

Embodiments that are described herein provide improved methods and systems for extracting mobile communication terminal identifiers from mobile terminals carried on individuals. The disclosed techniques refer primarily to mobile communication terminals that communicate over both a cellular network and over a Wireless Local Area Network (WLAN).

The scope of the invention is limited by the appended claims. The embodiments, which do not fall within the scope of the claims, are to be interpreted as examples.

An interrogation device intercepts the communication of such a communication terminal at a defined location and at a defined time. The interrogation device extracts from the intercepted communication two types of identifiers - A cellular identifier that identifies the terminal in the cellular network, and a WLAN identifier that identifies the terminal in the WLAN. A correlation system correlates the cellular and WLAN identifiers, and output the correlation for later use.

The methods and systems described herein take advantage of scenarios where individuals are located in defined areas for a sufficient period of time where their mobile terminals can be seamlessly probed. Examples of such locations are control checkpoints (e.g., passport control, immigration counters, and toll booths), Interne Cafes or restaurants. When an individual is served by a control checkpoint, for example, the individual's mobile communication terminal is known to be located in a well-localized geographical area. At this time, identification data of the mobile communication terminals can be extracted by a variety of methods. Other embodiments that do not involve checkpoints are addressed further below.

An interrogation device is installed so as to cover the defined area. When an individual is located in that area, the interrogation device communicates with the individual's mobile communication terminal, which can comprise both WLAN and cellular telephony devices, and extracts both the WLAN and cellular identifiers of the mobile communication terminal.

However, after the WLAN and cellular identifiers are extracted, there may still be some uncertainty as to whether these two sets of identifiers are from the same mobile communication terminal. the correlation system thus correlates the extracted WLAN and cellular identifiers from the mobile communication terminal based on the specific location and time at which the identifiers were extracted in order to reliably ensure that the cellular and WLAN identifiers were extracted from the same mobile communication terminal. In a typical embodiment, the correlation process is repeated multiple times at different locations. By intersecting the lists of correlated cellular and WLAN identifiers from the different locations, the correlation system is able to increase the correlation confidence and remove false correlations.

In a typical implementation, the process of extracting cellular identifiers may be relatively slow - e.g., on the order of thirty seconds. Therefore, the techniques described herein are typically implemented in areas where the communication terminal is relatively stationary or at least moves with low speed. The WLAN interrogation process is typically limited in range in comparison with the cellular interrogation process. Additionally, the WLAN interrogation device is often physically small. Thus, WLAN identifier extraction typically returns a small number of identifiers in comparison with cellular identifier extraction.

In a checkpoint application, the interrogation device typically has a well-defined coverage footprint that is confined to the immediate vicinity of the checkpoint, in order to also avoid false correlations with other nearby communication terminals. In some embodiments, the correlation system is connected to multiple interrogation devices that cover multiple respective checkpoints (e.g., a row of immigration counters). In an example embodiment, the interrogation devices are activated in alternation in order to avoid mutual interference. In an alternative embodiment, a single interrogation device is connected to multiple antennas that cover the multiple checkpoints, respectively. Various mechanisms can be used for differentiating between communication terminals at different checkpoints in this embodiment.

In alternative embodiments, a portable interrogation device is deployed *ad hoc* at an expected location of a target individual. In other embodiments, such an *ad hoc* deployment involves multiple interrogation devices that enable pin-pointing the defined location with greater accuracy. Other system configurations and deployment scenarios are described hereinbelow.

The disclosed techniques are highly reliable in correlating the cellular and WLAN identifiers of the mobile communication terminals based the location and time during which the identifiers were extracted. In particular, these techniques are effective against hostile users who change phones frequently, use fake, stolen or prepaid phones, or take other obfuscation measures. The correlations found using the disclosed techniques enable authorities to track suspect individuals and prevent crimes and terrorist events with high reliability.

Moreover, the disclosed correlation techniques enable subsequent tracking of communication terminals using their WLAN identifiers. This capability is of considerable importance in some scenarios because WLAN identifiers are transmitted on a different physical interface (Wi-Fi vs. GSM/UMTS/LTE), and are not known *a-priori* (e.g., cannot be obtained from the mobile service provider). By obtaining the WLAN identifier of a certain individual using the correlation methods described herein, it is possible to track the individual over the WLAN interface.

### SYSTEM DESCRIPTION

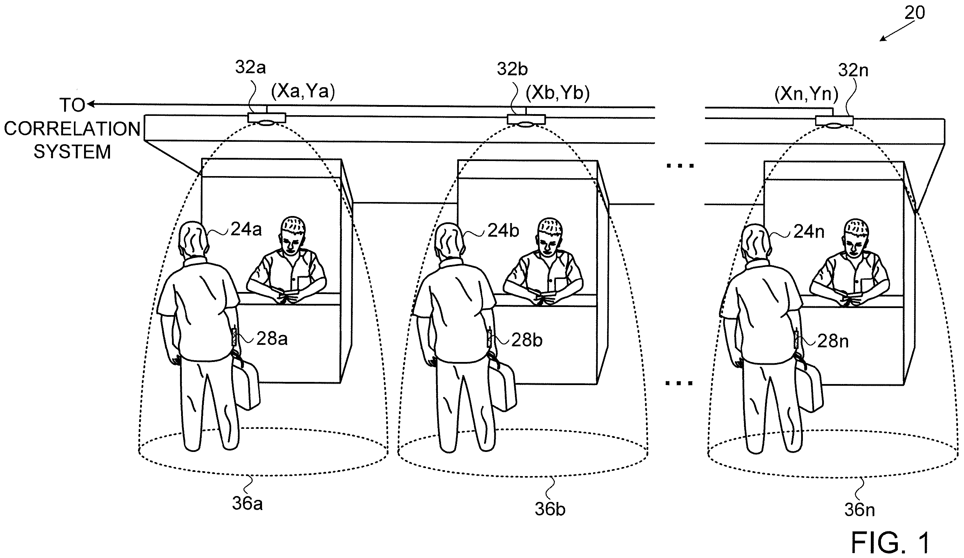

Fig. 1 is a pictorial, schematic illustration of a system 20 for collecting information at control checkpoints, in accordance with an embodiment described herein. The checkpoint environment is shown purely by way of example, in order to demonstrate one possible type of defined area where mobile communication terminals can be interrogated for the purpose of cellular and WLAN identifier correlation. In alternative embodiments, the disclosed techniques can be implemented in various other types of defined areas and applications.

In the present example, system 20 is installed in a row of passport control checkpoints at an airport. Alternatively, however, a system of this sort may be used in any other kind of control checkpoint, such as immigration counters, check-in counters and airport departure gates. Although the embodiments described herein refer to airports, the disclosed techniques can be used in checkpoints that operate in any other suitable location or environment, such as seaports, toll booths, and border crossings. Other kinds of checkpoints may comprise, for example, security screening checkpoints at public buildings.

For the embodiment depicted in Fig. 1, there are n control checkpoints. Individuals denoted 24a, 24b,... 24n that are served by the n control checkpoints carry mobile communication terminals, such as mobile phones 28a, 28b,...28n. At least some of these communication terminals are capable of communicating both on a cellular network and on a WLAN. The cellular network may comprise, for example, a Global System for Mobile Communications (GSM), a Universal Mobile Telecommunications System (UMTS) or any other suitable type of cellular network. The WLAN (also sometimes referred to as a Wi-Fi network) typically operates in accordance with the IEEE 802.11 standard or one of its derivatives.

Although the embodiments described herein refer mainly to mobile phones, the disclosed techniques can be used with various other types of communication terminals, such as wireless-enabled portable computers, Personal Digital Assistants (PDAs), smartphones and/or any other suitable type of mobile terminal having cellular and WLAN communication capabilities.

In the example of Fig. 1, system 20 comprises multiple interrogation devices 32a, 32b,... 32n, also referred to hereafter as interrogators. Interrogation devices 32a, 32b, ... 32n have respective predefined coverage footprints 36a, 36b, ... 36n that cover the immediate vicinities of the respective checkpoints. In the configuration of Fig. 1, interrogation devices 32a, 32b, ... 32n are installed above the checkpoints at the Cartesian Coordinates (Xa,Ya), (Xb,Yb), .... (Xn,Yn), respectively, relative to an arbitrary but known reference for identifying the location of the interrogation devices. Each interrogator above its respective checkpoint comprises one or more downward-looking directional antennas. In alternative embodiments, any other suitable installation scheme can also be used. The system may comprise any desired number n of interrogation devices, and in some embodiments only a single interrogation device.

Each interrogator is capable of identifying mobile communication terminals that are located in its coverage footprint, establishing communication with the detected terminals and extracting one or more identifiers of the terminals. The interrogation device may extract any suitable cellular identifiers, such as an International Mobile Subscriber Identity (IMSI), Mobile Station International Subscriber Directory Number (MSISDN), International Mobile Equipment Identity (IMEI) or Temporary Mobile Subscriber Identity (TMSI), of a detected terminal. The interrogator is also configured to extract WLAN identifiers such as the Medium Access Control (MAC) address or the Internet Protocol (IP) address of the mobile communication terminal. In an example embodiment, extracting the identifiers of a given mobile communication terminal takes no more than thirty seconds. Alternatively, however, any other suitable time interval may also be used.

Typically, the interrogation device imitates the operation of a cellular base station, so as to solicit the mobile communication terminal to establish communication with the interrogation device. After extracting the mobile communication terminal's cellular identifier, the interrogation device typically returns the mobile communication terminal back to the locally-available cellular network with which the terminal communicated previously. The entire solicitation and extraction process is usually transparent to the terminal user. In an example embodiment, the interrogation device solicits the terminal by producing a signal that is stronger (at the terminal) than the signals of the wireless network with which the terminal communicates.

Interrogation devices of this sort are sometimes referred to as "IMSI catchers." Examples of IMSI catching techniques are described, for example, by Strobel in "IMSI Catcher," July 13, 2007, by Asokan et al., in "Man-in-the-Middle Attacks in Tunneled Authentication protocols," the 2003 Security Protocols Workshop, Cambridge, UK, April 2-4, 2003, and by Meyer and Wetzel in "On the Impact of GSM Encryption and Man-in-the-Middle Attacks on the Security of Interoperating GSM/UMTS Networks," proceedings of the 15th IEEE International Symposium on Personal, Indoor and Mobile Radio Communications, Barcelona, Spain, September 5-8, 2004, pages 2876-2883. Any of these known schemes, as well as any other suitable type of interrogation device, can be used to implement the interrogators..

In the WLAN, the interrogation device extracts the WLAN identifier of the terminal at the checkpoint. In some embodiments, WLAN APs 60 in interrogation devices 32 comprise Wi-Fi APs that constantly broadcast their presence and solicits nearby terminals (e.g., smart-phones) to register. The initial response of the terminal reveals its MAC address, which is the desired WLAN identifier. Typically, each AP 60 (sometimes referred to as beacons in this context) transmits "Beacon" messages at frequent intervals, e.g., ten times per second. The "Beacon" message advertizes the AP capabilities.

Stations (e.g., smart-phones) constantly listen to new beacon messages, e.g., for identifying better-quality or lower-cost APs. When a station requests AP features, it reveals its MAC address to the AP. Certain aspects of extracting MAC identifiers from Wi-Fi communication devices are addressed, for example, in U.S. Patent Application Publication 2011/0128127.

The extracted cellular and WLAN identifiers of the communication terminals are provided to a correlation system (addressed below, not shown in Fig. 1). Interrogation devices 32a, 32b,... 32n may interrogate communication terminals that operate in accordance with any suitable cellular standard or protocol, such as GSM or UMTS as well as any suitable WLAN protocol. Alternatively, a given checkpoint may be equipped with multiple interrogation devices for covering multiple networks.

Each interrogation device is installed and configured such that its coverage area (coverage footprint) is confined to a well-localized region as shown in Fig. 1. As such, if the interrogation device identifies the presence of a certain mobile communication terminal, there is high likelihood that the individual carrying this terminal is currently close to the WLAN Interrogator.

The operation of interrogation devices in a variety of embodiments is addressed in detail in U.S. Patent Application Serial Number 13/253,935, filed June 10, 2011, which is incorporated herein by reference.

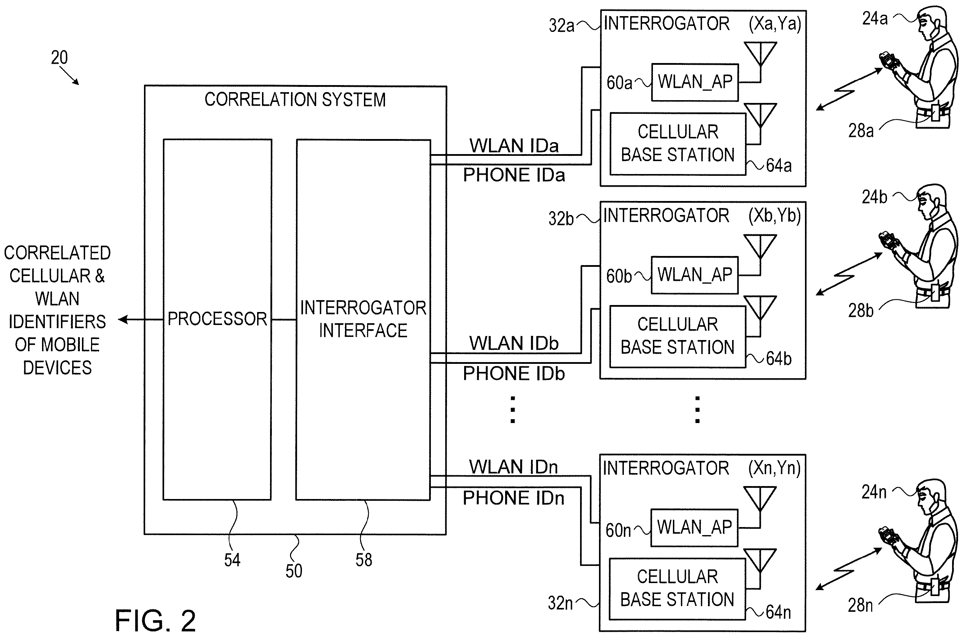

Fig. 2 is a block diagram that schematically illustrates system 20, in accordance with an embodiment that is described herein. The system comprises interrogators 32a, 32b, ...32n, one interrogator for each checkpoint. Each of the n interrogators comprises a WLAN access point (AP) denoted by WLAN_AP shown in Fig. 2 as 60a, 60b, ... 60n, and a cellular base station 64a, 64b, ...64n. Typically, the cellular base station and the WLAN AP of a given interrogator have directional antennas having similar coverage footprints.

When individuals 24a, 24b, ... 24n carrying mobile communication terminals approach the predefined coverage footprint regions 36a, 36b, ... 36n in the immediate vicinity of a respective checkpoint, interrogators 32a, 32b, ... 32n communicate with the mobile devices 28a, 28b, ... 28n, and extract the WLAN and cellular identifiers shown in Fig. 2 as WLAN IDa, WLAN IDb, ... WLAN IDn and PHONE IDa, PHONE IDb, ... PHONE IDn, respectively. The WLAN and cellular identifier data are sent to a correlation system 50, which comprises a processor 54 and an interrogator interface 58.

Interrogator interface 58 receives WLAN IDa, WLAN IDb, ... WLAN IDn and PHONE IDa, PHONE IDb, ... PHONE IDn data along with a location identifier of the corresponding interrogator 32a, 32b, ... 32n, such as an interrogator identification number, interrogator coordinates (Xa, Ya), (Xb, Yb), ... (Xn, Yn), or the like. The information is then sent to processor 54. Processor 54 correlates cellular identifiers with WLAN identifiers. The processor determines and outputs pairs of {cellular identifier, WLAN identifier} that belong to the same communication terminal with high likelihood. The correlated cellular and WLAN identifiers of the mobile terminals, possibly along with the checkpoint location data, are then time stamped.

The correlations between cellular and WLAN identifiers may be presented to an operator, used for triggering alerts, stored in a suitable database or other data structure, provided to another computerized system over a suitable interface, or output in any other suitable manner. For example, one of the identifiers (typically the cellular identifier) may already be associated with information regarding the individual using the communication terminal. The disclosed techniques enable associating the individual with the WLAN identifier, as well. Several examples of subsequent processing flows are described further below.

The configurations of Figs. 1 and 2 are example configurations, which are chosen purely for the sake of conceptual clarity. In alternative embodiments, any other suitable system configuration can also be used. For example, the functions of correlation processor 54 can be integrated with various other analytic functions. The disclosed techniques are applicable to human-operated checkpoints, as well as automated or automatic checkpoints (e.g., biometric checkpoints).

The elements of system 20 may be implemented in hardware, in software, or using a combination of hardware and software elements. In some embodiments, the correlation processor comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### DESCRIPTION OF THE IDENTIFIER EXTRACTION AND CORRELATION METHOD

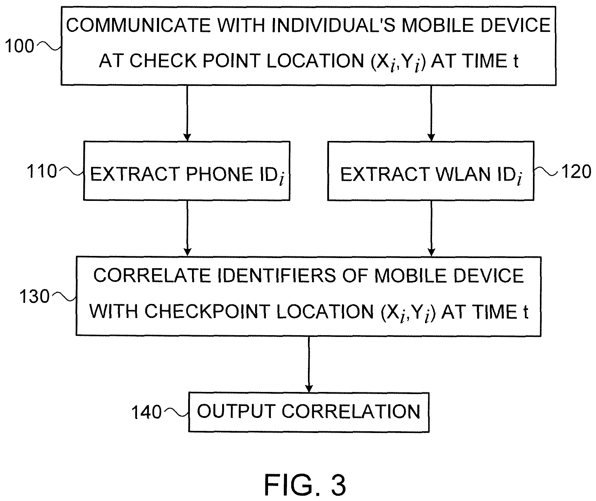

Fig. 3 is a flow chart that schematically illustrates a method for collecting information at control checkpoints, in accordance with an embodiment that is described herein. The description that follows refers to a single checkpoint and a single interrogation device for the sake of clarity. The disclosed method can be used, as described above, in a system comprising n interrogation devices that handle n checkpoints.

The method begins when the individual carrying a mobile terminal (e.g., mobile phone) is served by a certain control checkpoint. While the individual is served by checkpoint i at a location (Xi,Yi) among the n checkpoints where i={a,b,...n}, the interrogator device that covers this checkpoint identifies a mobile terminal that is located in its coverage area, and establishes communication with the identified mobile terminal, at a communication step 100 at time t. Since the identified mobile terminal is located in the well-localized coverage area of the interrogation device while the individual in question is served by the checkpoint, it can be assumed with high likelihood that the mobile terminal is carried by the individual.

The Interrogator extracts one or more cellular identifiers (e.g., IMSI, MSISDN, IMEI or TMSI) and one or more WLAN identifiers (e.g. MAC or IP addresses) of the identified mobile terminal, at extraction steps 110 and 120, respectively. The Interrogator provides correlation system 50 with the extracted identifiers. Correlation processor 54 correlates the cellular and WLAN identifiers of the mobile terminal, at a correlation step 130. Correlation system 50 outputs the resulting correlation, at an output step 140. The correlation system may time stamp each correlation with the time t.

In practice, a single correlation between a cellular identifier and a WLAN identifier may not give sufficient confidence that the identifiers genuinely originate from the same communication terminal. In some embodiments, system 20 performs multiple correlations at different locations or at different times, in order to increase the correlation confidence and remove false correlations.

In other embodiments, the cellular and WLAN identifiers of a given terminal may be extracted by multiple interrogators that jointly cover the same coverage footprint from different angles. This sort of configuration enables to pinpoint the terminal's location with greater accuracy, and therefore increase the correlation confidence level and reduce the probability of false correlations. This solution is especially useful in use cases where multiple communication terminals may be present in the coverage region.

### OTHER EMBODIMENTS FOR IDENTIFIER CORRELATION

In some embodiments, after soliciting a terminal to register, a WLAN AP 60 in an interrogation device 32 extracts one or more application-layer identifiers from the WLAN communication of the communication terminal, and correlates the application-layer identifiers with the extracted WLAN identifier of the terminal. In these embodiments, after completing registration, the terminal begins WLAN communication (e.g., over the Internet) via the interrogators device's AP. (The interrogators device's AP in these embodiments should have Internet connectivity, for example by routing the traffic through a suitable 3G wireless modem.)

When the terminal conducts Internet communication via the interrogator device's AP, one or more applications in the terminal may transmit application-layer identifiers that identify the terminal. One example is the "Whatsapp" application, which transmits the terminals MSISDN (telephone number) as the user identifier. Alternatively, any other suitable application-layer identifier of any other suitable application can be used.

The interrogator device's AP extracts the application-layer identifier from the WLAN communication. Processor 54 can then correlate the application-layer identifier with the extracted WLAN identifier (e.g., MAC address) of the terminal. For example, every WLAN packet transmitted over the air contains the Wi-Fi MAC address as a layer-1 identifier. By extracting the MAC address and an application-layer identifier from the same packet, the two identifiers can be correlated as originating from the same terminal. The performance of the application-layer-based technique may depend, however, on the set of applications running on the terminal and the frequency at which they communicate.

In other embodiments, the correlation system could also correlate the cellular and WLAN identifiers of the mobile communication terminals extracted by the interrogators with identification information provided by the individuals at the checkpoints, such as facial images captured by checkpoint video monitors, passport data, and the like. The correlation system can also comprise an Information Technology (IT) interface, which accepts the identification information of the individuals from some IT system. The correlation processor can then correlate the WLAN, Cellular, and interrogator location identifiers with the identification information at a given time t.

In other embodiments, the interrogator can be placed in a portable enclosure, e.g. a suitcase, which may be hidden from individuals, and one or more such interrogators can be placed within an area to create an *ad hoc* network, such that the extracted cellular and WLAN identifiers based on the location of the interrogators are correlated at a time t. In another embodiment, multiple portable interrogators may be configured at different points geometrically in a certain region of space in which the individual moves, in order to utilize triangulation methods or otherwise pinpointing the position of the individual's mobile terminal. This technique further removes ambiguities in correlating the WLAN and cellular identifiers based on the location of the interrogator. The correlations may be presented to an operator, used for triggering alerts, stored in a suitable database or other data structure, provided to another computerized system over a suitable interface, or output in any other suitable manner.

In some embodiments, system 20 may be operated in conjunction with a WLAN-based tracking system. Such WLAN-based tracking systems are typically deployed in locations such as airport terminals and shopping malls, for example in crowd monitoring and measurement applications. A WLAN-based system of this sort is able to track the MAC addresses of WLAN terminals, and identify their movements with high spatial and temporal resolution. In an example embodiment, system 20 may correlate a certain WLAN identifier with a certain cellular identifier using the above-described techniques. Then, the WLAN-based tracking system is invoked to track the communication terminal having the WLAN identifier in question. The movements of the tracked terminal can be recorded or displayed to an operator, for example.

In some embodiments, the WLAN-based tracking system can be used to identify a meeting or other relationship between target individuals, by detecting (based on tracking WLAN identifiers) that their communication terminals traverse similar paths or lie in close vicinity to one another for a period of time.

In another embodiment, the interrogators are not limited to WLAN and cellular identifiers, but can also be configured to extract the identifiers of Bluetooth or any other point-to-point wireless device deployed in the mobile device that is carried by the individual, such as the MAC address, Bluetooth Device (BD) address, or IP address. These wireless devices may also comprise near field point-to-point communication schemes like Wireless Gigabit (WiGig) devices operating at millimeter-wave frequencies.

Although the embodiments described herein mainly address control checkpoints, the methods and systems described herein can also be used in other locations in which one or more individuals are relatively isolated and identifiers can be correlated reliably with mobile communication terminals of the individuals, such as in a car approaching a toll booth whereby the mobile device identifiers can be extracted at a time t and correlates with the license plate of the car or facial images captured by a video camera at the toll booth, or other identifiers such as radio frequency identification tag (RFID) attached to the car as an example embodiment.

In other embodiments, the WLAN and cellular identifiers of mobile communication terminals can be extracted from interrogators deployed in regions around devices such as, for example, vending machines or Automatic Teller Machines (ATMs).

It will thus be appreciated that the embodiments described above are cited by way of example, and that the present invention is not limited to what has been particularly shown and described hereinabove.

## Claims

1. A method, comprising:
interrogating a mobile communication terminal at a defined location using an interrogation device with a coverage footprint confined to the immediate vicinity of the defined location, wherein the interrogating comprises:
soliciting the mobile communication terminal to establish cellular communication with the interrogation device by imitating the operation of a cellular base station, and
soliciting the mobile communication terminal to register with the interrogation device by imitating the operation of a Wireless Local Area Network, WLAN, access point, AP;
intercepting, using the interrogation device, communication of a mobile communication terminal in response to the interrogating while the communication terminal is located at a defined location at a defined time;
extracting from the intercepted communication a first identifier that identifies the communication terminal in a cellular network, and a second identifier that identifies the communication terminal in a Wireless Local Area Network, WLAN;
correlating the first and second identifiers based on the defined location and time of the intercepted communication;
identifying an individual using the mobile communication terminal based on the first identifier;
associating the identified individual with the second identifier based on the correlation between the first and second identifiers; and
tracking the individual in a WLAN network using the second identifier.

2. The method according to claim 1, wherein the defined location is a passport control checkpoint configured for collecting information from the individual, and wherein the method further comprises correlating the information collected from the individual with the first and second identifiers.

3. The method according to claim 1, wherein the extracted first identifier comprises at least one identifier type selected from a group of types consisting of an International Mobile Subscriber Identity (IMSI), a Mobile Station International Subscriber Directory Number (MSISDN), an International Mobile Equipment Identity (IMEI) and a Temporary Mobile Subscriber Identity (TMSI).

4. The method according to claim 1, wherein the extracted second identifier comprises a Medium Access Control (MAC) address.

5. The method according to claim 1, wherein intercepting the communication comprises receiving the communication using multiple interrogation devices having respective coverage regions that jointly define the location.

6. The method according to claim 1, and comprising extracting from the intercepted communication a third identifier that identifies the communication terminal in a point-to-point communication system, and correlating the first, second and third identifiers.

7. The method according to claim 1, and comprising extracting from the intercepted communication an application-layer identifier that identifies the communication terminal in an application running over the WLAN, and correlating the application-layer identifier with the second identifier.

## Patentansprüche

1. Verfahren, das Folgendes umfasst:
Abfragen eines mobilen Kommunikationsendgeräts an einem definierten Standort unter Verwendung einer Abfragevorrichtung mit einem Abdeckungsbereich, der auf die unmittelbare Umgebung des definierten Standorts beschränkt ist, wobei die Abfragevorrichtung Folgendes umfasst:
Anfordern, dass das mobile Kommunikationsendgerät durch Imitieren des Betriebs einer zellularen Basisstation eine zellulare Kommunikation mit der Abfragevorrichtung herstellt, und
Anfordern, dass sich das mobile Kommunikationsendgerät durch Imitieren des Betriebs eines drahtlosen lokalen Netzwerk(WLAN)-Zugangspunktes, AP, bei der Abfragevorrichtung registriert;
Abfangen unter Verwendung der Abfragevorrichtung einer Kommunikation eines mobilen Kommunikationsendgeräts in Reaktion auf das Abfragen, während sich das Kommunikationsendgerät zu einer definierten Zeit an einem definierten Standort befindet;
Extrahieren aus der abgefangenen Kommunikation einer ersten Kennung, die das Kommunikationsendgerät in einem zellularen Netzwerk identifiziert, und einer zweiten Kennung, die das Kommunikationsendgerät in einem drahtlosen lokalen Netzwerk, WLAN, identifiziert;
Korrelieren der ersten und der zweiten Kennung auf Basis des definierten Standorts und der definierten Zeit der abgefangenen Kommunikation;
Identifizieren eines Individuums unter Verwendung des mobilen Kommunikationsendgeräts auf Basis der ersten Kennung;
Verknüpfen des identifizierten Individuums mit der zweiten Kennung auf Basis der Korrelation zwischen der ersten und der zweiten Kennung und
Verfolgen des Individuums in einem WLAN-Netzwerk unter Verwendung der zweiten Kennung.

2. Verfahren nach Anspruch 1, wobei der definierte Standort eine Passkontrollstelle ist, die zum Sammeln von Informationen von einem Individuum ausgelegt ist, und wobei das Verfahren ferner das Korrelieren der Informationen, die vom Individuum gesammelt wurden, mit der ersten und der zweiten Kennung umfasst.

3. Verfahren nach Anspruch 1, wobei die extrahierte erste Kennung mindestens einen Kennungstyp umfasst, der ausgewählt ist aus einer Gruppe von Typen, die aus einer internationalen Mobilteilnehmeridentität (IMSI), einer internationalen Mobilstationsteilnehmerverzeichnisnummer (MSISDN), einer internationalen Mobilgeräteidentität (IMEI) und einer temporären Mobilteilnehmeridentität (TMSI) besteht.

4. Verfahren nach Anspruch 1, wobei die extrahierte zweite Kennung eine Medienzugriffssteuerungs(MAC)-Adresse umfasst.

5. Verfahren nach Anspruch 1, wobei das Abfangen der Kommunikation das Empfangen der Kommunikation unter Verwendung von mehreren Abfragevorrichtungen mit jeweiligen Abdeckungsregionen, die zusammen den Standort definieren, umfasst.

6. Verfahren nach Anspruch 1, das das Extrahieren einer dritten Kennung, die das Kommunikationsendgerät in einem Punkt-zu-Punkt-Kommunikationssystem identifiziert, aus der abgefangenen Kommunikation und das Korrelieren der ersten, zweiten und dritten Kennung umfasst.

7. Verfahren nach Anspruch 1, das das Extrahieren einer Anwendungsschichtkennung, die das Kommunikationsendgerät in einer Anwendung, die über das WLAN ausgeführt wird, aus der abgefangenen Kommunikation und das Korrelieren der Anwendungsschichtkennung mit der zweiten Kennung umfasst.

## Revendications

1. Procédé consistant :
à interroger un terminal de communication mobile à un emplacement défini à l'aide d'un dispositif d'interrogation avec une empreinte de couverture confinée au voisinage immédiat de l'emplacement défini, dans lequel l'interrogation consiste :
à solliciter le terminal de communication mobile pour établir une communication cellulaire avec le dispositif d'interrogation en imitant le fonctionnement d'une station de base cellulaire et à solliciter le terminal de communication mobile pour s'enregistrer avec le dispositif d'interrogation en imitant le fonctionnement d'un point d'accès (AP) de réseau local sans fil (WLAN) ;
à intercepter, à l'aide du dispositif d'interrogation, une communication d'un terminal de communication mobile à la suite de l'interrogation pendant que le terminal de communication est situé à un emplacement défini à un moment défini ;
à extraire de la communication interceptée un premier identifiant qui identifie le terminal de communication dans un réseau cellulaire, et un deuxième identifiant qui identifie le terminal de communication dans un réseau local sans fil (WLAN) ;
à mettre en corrélation les premier et deuxième identifiants en se basant sur l'emplacement et le moment définis de la communication interceptée ;
à identifier un individu utilisant le terminal de communication mobile en se basant sur le premier identifiant ;
à associer l'individu identifié au deuxième identifiant en se basant sur la corrélation entre les premier et deuxième identifiants ; et
à suivre l'individu dans un réseau WLAN à l'aide du deuxième identifiant.

2. Procédé selon la revendication 1, dans lequel l'emplacement défini est un point de contrôle de passeport configuré pour collecter des informations de l'individu et dans lequel le procédé consiste en outre à mettre en corrélation les informations collectées de l'individu avec les premier et deuxième identifiants.

3. Procédé selon la revendication 1, dans lequel le premier identifiant extrait comprend au moins un type d'identifiant sélectionné dans un groupe de types se composant d'une identité internationale d'abonné mobile (IMSI), un numéro d'annuaire d'abonnés international de station mobile (MSISDN), une identité internationale d'équipement mobile (IMEI) et une identité d'abonné mobile temporaire (TMSI).

4. Procédé selon la revendication 1, dans lequel le deuxième identifiant extrait comprend une adresse de contrôle d'accès au support (MAC).

5. Procédé selon la revendication 1, dans lequel l'interception de la communication consiste à recevoir la communication à l'aide de multiples dispositifs d'interrogation ayant des régions de couverture respectives qui définissent conjointement l'emplacement.

6. Procédé selon la revendication 1, et consistant à extraire de la communication interceptée un troisième identifiant qui identifie le terminal de communication dans un système de communication point à point et à mettre en corrélation les premier, deuxième et troisième identifiants.

7. Procédé selon la revendication 1, et consistant à extraire de la communication interceptée un identifiant de couche d'application qui identifie le terminal de communication dans une application s'exécutant sur le réseau WLAN et à mettre en corrélation l'identifiant de couche d'application avec le deuxième identifiant.
